# EUROPEAN PATENT SPECIFICATION

(11) **EP 2 036 338 B1**
(45) Date of publication and mention of the grant of the patent: **05.09.2012**
(21) Application number: 07795699.3
(22) Date of filing: 04.06.2007
(51) Int. Cl.: G06F 3/048, H04N 21/482, H04N 5/445

(54) **TECHNIQUES TO MANAGE AN ELECTRONIC PROGRAM GUIDE**
TECHNIK ZUM REGELN EINES ELEKTRONISCHEN PROGRAMMHANDBUCH
TECHNIQUES PERMETTANT DE GÉRER UN GUIDE DE PROGRAMMES ÉLECTRONIQUE

(30) Priority: 26.06.2006 US 474660
(43) Date of publication of application: 18.03.2009
(73) Proprietor: Microsoft Corporation, Redmond, WA 98052-6399 (US)
(72) Inventor: COOMER, Christen, E., Redmond, Washington 98052-6399 (US); COX, Elyssa, M., Redmond, Washington 98052-6399 (US); AZERA, Frederic, Redmond, Washington 98052-6399 (US); FONG, Jeffrey, C., Redmond, Washington 98052-6399 (US); SCHWESINGER, Mark, D., Redmond, Washington 98052-6399 (US); ELSBREE, John, Redmond, Washington 98052-6399 (US)
(74) Representative: Fischer, Michael Maria
(86) International application number: PCT/US2007/013109
(87) International publication number: WO 2008/002378

(56) References cited:
- EP-A2- 0 954 172
- US-A1- 2002 054 062
- US-A1- 2003 184 578
- US-A1- 2004 008 228
- US-A1- 2004 100 485
- US-A1- 2005 102 634
- US-A1- 2005 193 337
- US-B1- 6 532 590
- US-B1- 6 690 391

## Description

The advent of digital broadcasting has created a multichannel broadcasting environment giving a user access to a relatively large number of program channels. In some cases, the program channels may number in the hundreds if not thousands of channels. Along with the increase in program channels, there is a growing increase in the amount of information associated with a given channel. For example, each program channel may have programming information to display, such as a program summary, actors, ratings information, and so forth.

Electronic program guides have been developed in an attempt to manage and navigate through such large volumes of program channels and associated information. Electronic program guides, however, typically need to display large amounts of information to facilitate navigation at the expense of resolution, or vice-versa. In either case, a user may have difficulty navigating through an electronic program guide to quickly identify a program of interest. Consequently, there may be a need for improved electronic program guide techniques to solve these and other problems.
US 2003/184578 A1 relates to methods and apparatuses for presenting categorical programs in progressive levels of content detail. The method comprises generating a first tabular layout comprising a first level of content details for each of the plurality of programs. Once a program is selected, the method causes the first level of content details for the selected program to be adjusted to a second level of content details. The method then causes the spaces occupied by the plurality of programs to be resized to the second level of content details. Specifically, the space occupied by the selected program grows to accommodate more detailed information, and reducing spaces of non-selected programs.
US 2004/008228 A1 concerns a method used when editing an entry in an electronic program guide, which expands the dimensions of an EPG display field within the entry, enlarges the font size of the text in the display field and displays more complete information than displayed in an normal EPG display mode. In particular, the selected cell is expanded and now overlaps adjacent cells.
US 2005/193337 A1 concerns a method for resizing text describing a program displayed within an EPG to fit in a fixed size window on the display.
US 6 690 391 B1 relates to a method for efficient and intuitive presentation, navigation and selection of audio-visual (AV) information in a graphical user interface displayed on a display apparatus. Related AV information is organized as items within lists that correspond to various navigable fields of a status bar of the GUI during the GUI interactive mode. A highlighted navigable field of the status bar displays its list of related AV information and the items of the list are scrolled through the navigable field by a user causing a scrolling cylinder of a navigation and selection device to move in a scroll. A different field of the status bar may be selected by the user moving the scrolling cylinder in a lateral movement. Activation of the selection mechanism of the navigation and selection device will cause an AV device to be controlled in accordance with the currently displayed AV options.
EP 0 954 172 A2 relates to the displaying of an electronic preview guide whereby the size of EPG slots is companded in a non-linear manner in the time-axis direction, and whereby the character size varies in accordance with the size of the EPG slot.
It is the object of the present invention to provide an improved method for displaying an electronic program guide, as well as a corresponding system and computer-readable medium.
This object is solved by the subject matter of the independent claims.
Preferred embodiments are defined by the dependent claims.

This Summary is provided to introduce a selection of concepts in a simplified form that are further described below in the Detailed Description. This Summary is not intended to identify key features or essential features of the claimed subject matter, nor is it intended to be used to limit the scope of the claimed subject matter.

Various embodiments may be generally directed to an electronic program guide for a media system. In one embodiment, for example, an apparatus may comprise a display device to display an electronic program guide implemented as a dynamic scaling grid. A media processing device may be coupled to the display, such as a set-top box, media center, media server, computer, and so forth. The media processing device may comprise a processor and an electronic program guide management module. The electronic program guide management module may manage the dynamic scaling grid on the display. The dynamic scaling grid may comprise multiple content cells in a grid formation. Each content cell may host a program item and display a first set of metadata associated with the program item. When a content cell is selected by a user, such as via a remote control or other human input device (HID), the electronic program guide management module may expand the selected content cell in order to display a second set of associated metadata for the program item hosted by the selected content cell. The electronic program guide may adjust the size of surrounding or adjacent content cells to accommodate the new size of the expanded content cell. This may allow a user to access more information about a program item of interest while still allowing the user to view other program items that might be potential choices.

In some embodiments, information expansion is tied to the area of focus instead of having extra metadata elsewhere on the screen. This makes the browsing and navigation experience easier by keeping a viewer's focus in one central location with other less. relevant information surrounding it. Another feature is that the entire row grows vertically so we can add additional information relevant to a viewer's focus related to the channel and other shows on the channel in close proximity. Other embodiments are described and claimed.

### BRIEF DESCRIPTION OF THE DRAWING

**FIG. 1** illustrates an exemplary embodiment of a media system.

**FIG. 2** illustrates an exemplary embodiment of a media processing device.

**FIG. 3** illustrates an exemplary embodiment of a first image of a dynamic scaling grid.

**FIG. 4** illustrates an exemplary embodiment of a second image of dynamic scaling grid.

**FIG. 5** illustrates an exemplary embodiment of a third image of a dynamic scaling grid.

**FIG. 6** illustrates an exemplary embodiment of a fourth image of a dynamic scaling grid.

**FIG. 7** illustrates an exemplary embodiment of a fifth image of a dynamic scaling grid.

**FIG. 8** illustrates an exemplary embodiment of a sixth image of a dynamic scaling grid.

**FIG. 9** illustrates an exemplary embodiment of a seventh image of a dynamic scaling grid.

**FIG. 10** illustrates an exemplary embodiment of a logic flow.

### DETAILED DESCRIPTION

Various embodiments may be generally directed to an electronic program guide for a media system. In particular, various embodiments are directed to a dynamic scaling technique for managing the relationship between a program and its associated metadata. The dynamic scaling technique creates an electronic program guide in the form of a dynamic scaling grid. Each content cell in the dynamic scaling grid is scalable and may grow to accommodate its own metadata while in focus. Examples of metadata may include thumbnails, titles, synopsis, genre, keywords, related material, credit lists, actors, ratings information, hyperlinks, and any other desired information. In edge case scenarios where the cell hosting a program item is originally too narrow, it is stretched in both the vertical axis and horizontal axis thus accommodating the relevant information. The dynamic scaling technique also facilitates the content cell to grow and contain content provider information including branding and promotional elements. Further, an entire row and/or column having an expanded content cell may also grow in a manner similar to the content cell. Growth of the entire row and/or column provides additional opportunities to display other metadata, such as branding and promotional information, for example. In this manner, a user may navigate through the electronic program guide and more closely examine program items of interest while maintaining a desired display resolution and display area for the other program items in the dynamic scaling grid.

Implementing an electronic program guide using a dynamic scaling grid provides several advantages over conventional techniques. For example, designing a useable and aesthetically pleasing guide interface for limited (e.g. approximately 10 feet) viewing and interaction is a challenge across the entertainment industry. Programming content, associated metadata and related branding content all vie for the same space. A dynamic scaling grid allows all of this information to be prioritized and emphasized based on the viewer's focus so that the in-focus experience is optimized for richness and the out-of-focus experience is optimized for browsing (e.g., multiple smaller pieces ofmetadata) displayed in position within the context of the grid while remaining legible and preserving a given set of design goals. In another example, network providers and users both benefit from the balance struck between information density and ease of use. This is a balance not found in conventional electronic program guides. The user experience design creates for a more compelling platform which partners will want to harness, providers will want to leverage, and users will want to enjoy. The dynam ic scaling grid provides flexibility to integrate varying amounts of metadata for current design goals as well as future enhancements and improvements.

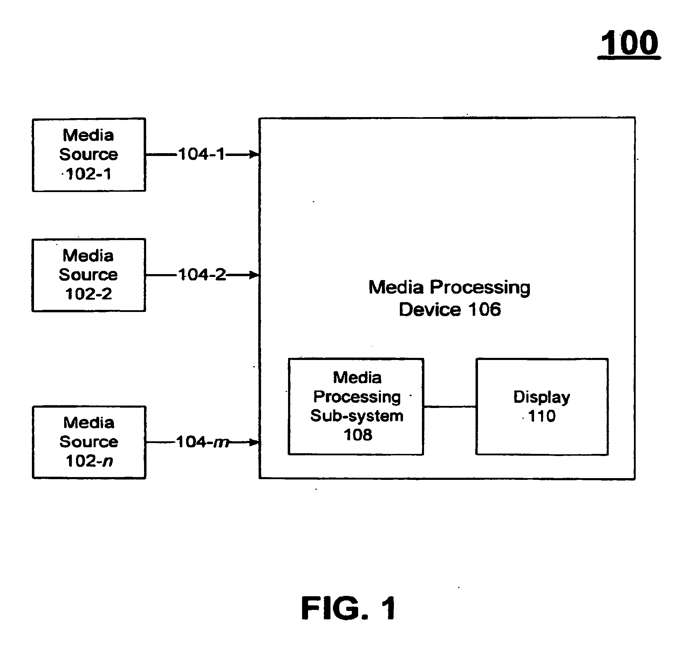

**FIG. 1** illustrates a block diagram for a media system 100. Media system 100 may represent a general system architecture suitable for implementing various embodiments. Media system 100 may comprise multiple elements. An element may comprise any physical or logical structure arranged to perform certain operations. Each element may be implemented as hardware, software, or any combination thereof, as desired for a given set of design parameters or performance constraints. Examples of hardware elements may include devices, components, processors, microprocessors, circuits, circuit elements (e.g., transistors, resistors, capacitors, inductors, and so forth), integrated circuits, application specific integrated circuits (ASIC), programmable logic devices (PLD), digital signal processors (DSP), field programmable gate array (FPGA), memory units, logic gates, registers, semiconductor device, chips, microchips, chip sets, and so forth. Examples of software may include any software components, programs, applications, computer programs, application programs, system programs, machine programs, operating system software, middleware, firmware, software modules, routines, subroutines, functions, methods, interfaces, software interfaces, application program interfaces (API), instruction sets, computing code, computer code, code segments, computer code segments, words, values, symbols, or any combination thereof. Although media system 100 as shown in FIG. 1 has a limited number of elements in a certain topology, it may be appreciated that media system 100 may include more or less elements in alternate topologies as desired for a given implementation. The embodiments are not limited in this context.

In various embodiments, media system 100 may be arranged to communicate, manage or process different types of information, such as media information and control information. Examples of media information may generally include any data representing content meant for a user, such as voice information, video information, audio information, image information, textual information, numerical information, alphanumeric symbols, graphics, and so forth. Control information may refer to any data representing commands, instructions or control words meant for an automated system. For example, control information may be used to route media information through a system, to establish a connection between devices, instruct a device to process the media information in a predetermined manner, and so forth.

In various embodiments, media system 100 may include media sources 102-1-n. Media sources 102-1-*n* may comprise any physical or logical entity capable of sourcing or delivering media information (e.g., digital video signals, audio signals, and so forth) and/or control information to media processing device 106. Examples of media sources 102-1-n may include a DVD device, a VHS device, a digital VHS device, a personal video recorder (PVR), a digital video recorder (DVR), a computer, a gaming console, a CD player, a digital camera, a digital camcorder, and so forth. Other examples of media sources 102-1-n may include media distribution systems to provide broadcast or streaming analog or digital media information to media processing device 106. Examples of media distribution systems may include, for example, over the air (OTA) broadcast systems, terrestrial cable systems (CATV), satellite broadcast systems, media delivered over a network such as the Internet, and so forth. Media sources 102-1-n may be internal or external to media processing device 106 as desired for a given implementation.

In various embodiments, media system 100 may comprise a media processing device 106 to connect to one or more media sources 102-1-n over one or more communications media 104-1-*m.* Media processing device 106 may comprise any logical or physical entity that is arranged to process media information received from media sources 102-1-*n.* In various embodiments, media processing device 106 may comprise, or be implemented as, a computer, a set top box (STB), a media server, a desktop computer, a personal computer (PC), a laptop computer, a handheld computer, a home entertainment system, a home theater system, and so forth.

In various embodiments, media processing device 106 may include a media processing sub-system 108. Media processing sub-system 108 may comprise a processor, memory, and application hardware and/or software arranged to process media information received from media sources 102-1-n. For example, media processing sub-system 108 may be arranged to perform various media management operations, such as receiving media information, storing media information, recording media information, playing media information, performing trick mode operations for media information, performing seek operations for media information, and so forth. Media processing sub-system 108 may output processed media information to a display 110. Display 110 may be any display capable of displaying media information received from media sources 102-1-n.

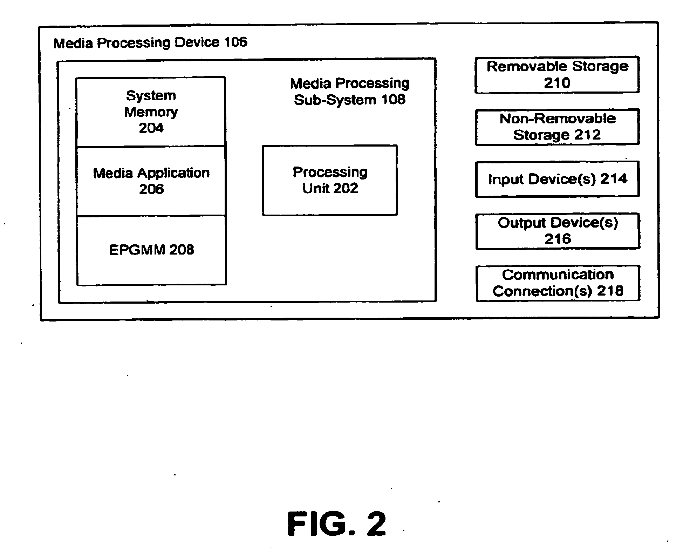

**FIG. 2** illustrates a more detailed block diagram of media processing device 106. In its most basic configuration, media processing device 106 typically includes at least one processing unit 202 and memory 204. Processing unit 202 may be any type of processor capable of executing software, such as a general-purpose processor, a dedicated processor, a media processor, a controller, a microcontroller, an embedded processor, a digital signal processor (DSP), and so forth. Memory 204 may be implemented using any machine-readable or computer-readable media capable of storing data, including both volatile and non-volatile memory. For example, memory 204 may include read-only memory (ROM), random-access memory (RAM), dynamic RAM (DRAM), Double-Data-Rate DRAM (DRAM), synchronous DRAM (SDRAM), static RAM (SRAM), programmable ROM (PROM), erasable programmable ROM (EPROM), electrically erasable programmable ROM (EEPROM), flash memory, polymer memory such as ferroelectric polymer memory, ovonic memory, phase change or ferroelectric memory, silicon-oxide-nitride-oxide-silicon (SONOS) memory, magnetic or optical cards, or any other type of media suitable for storing information. As shown in FIG. 1, memory 204 may store various software programs, such as one or more media applications 206, an electronic program guide management module (EPGMM) 208, and accompanying data.

Media processing device 106 may also have additional features and/or functionality beyond configuration 106. For example, media processing device 106 may include removable storage 210 and non-removable storage 212, which may also comprise various types of machine-readable or computer-readable media as previously described. Media processing device 106 may also have one or more input devices 214 such as a keyboard, mouse, pen, voice input device, touch input device, remote control, wireless mouse, air mouse, and so forth. One or more output devices 216 such as a display (e.g., display 110), speakers, printer, and so forth may also be included in media processing device 106 as well.

Media processing device 106 may further include one or more communications connections 218 that allow media processing device 106 to communicate with other devices. Communications connections 218 may include various types of standard communication elements, such as one or more communications interfaces, network interfaces, network interface cards (NIC), radios, wireless transmitters/receivers (transceivers), wired and/or wireless communication media, physical connectors, and so forth. Communication media typically embodies computer readable instructions, data structures, program modules or other data in a modulated data signal such as a carrier wave or other transport mechanism and includes any information delivery media. The term "modulated data signal" means a signal that has one or more of its characteristics set or changed in such a manner as to encode information in the signal. By way of example, and not limitation, communication media includes wired communications media and wireless communications media. Examples of wired communications media may include a wire, cable, metal leads, printed circuit boards (PCB), backplanes, switch fabrics, semiconductor material, twisted-pair wire, co-axial cable, fiber optics, a propagated signal, and so forth. Examples of wireless communications media may include acoustic, radio-frequency (RF) spectrum, infrared and other wireless media. The terms machine-readable media and computer-readable media as used herein are meant to include both storage media and communications media.

In one embodiment, media processing device 106 may store EPGMM 208 and accompanying data in system memory 204. EPGMM 208 may be arranged to manage a dynamic scaling grid on display 110. The dynamic scaling grid may comprise multiple content cells in a grid formation. Each content cell may host a program item and display a first set of metadata associated with the program item. When a content cell is selected by a use, EPGMM 208 may expand the selected content cell in order to display a second set of associated metadata for the program item hosted by the selected content cell. EPGMM 208 may adjust the size of surrounding or adjacent content cells to accommodate the new size of the expanded content cell.

In various embodiments, a content cell for a dynamic scaling grid may comprise an area having defined borders, similar to a cell in a spreadsheet application, for example. Each content cell may be assigned to host an item and associated metadata. An item may represent any abstract entity or set of information, such as a program, a channel, a station, a time, or any other type of media content or information. Examples of a program item may include a particular program, such as a television show "Lost," "Invasion," "NCIS," and so forth. Examples of a channel item may include a particular channel used by a television tuner or a channel of internet content, such as channels 2, 3, 4, 5 and so forth. Examples of a station item may include a particular station assigned to a channel, such as ABC, NBC, CBS, FOX, and so forth. It may be appreciated that these are merely a few examples of an item, and any number of items may be used by the dynamic scaling grid as desired for a given implementation.

One or more content cells may be defined based on the type of information displayed by the content cell. In one embodiment, for example, there may be at least two types of content cells. A first content cell type may comprise a channel content cell having channel items and associated metadata. A second content cell type may comprise a program content cell having program items and associated metadata. Other content cell types may be defined for other items as desired for a given implementation.

In various embodiments, each item may have a set of metadata associated with the item. Metadata may refer to data that describes other data. Generally, a set of metadata describe a single set of data, called a resource or item. As used herein, metadata may refer to data that describes an item. The metadata may be any type of information associated with a given item. Examples of metadata may include, but are not limited to, such data as thumbnails, titles, program titles, episode titles, program synopsis, episode synopsis, genre, keywords, related material, credit lists, actors, ratings information, hyperlinks, portals, images, logos, animations, video clips, audio clips, promotional material, advertisements, and so forth. The embodiments are not limited in this context.

In various embodiments, EPGMM 208 may expand and contract the size of a content cell to accommodate changes in metadata in a number of different ways. Each content cell may have a height dimension and a width dimension. For example, each content cell may have a height along a vertical or x-axis, and a width along a horizontal or y-axis. EPGMM 208 may expand a given content cell by modifying its height, width, or in some cases both height and width. The amount of expansion or contraction may be proportional to the amount of metadata to be displayed by the content cell. For example, EPGMM 208 may expand a content cell based on an amount of information included within the second set of metadata. The expansion and contraction may also depend on other factors as well, like the amount of cell visible in the current view of the grid, which may vary based on duration of show, start and end time of program versus displayed time span in the view, and so forth. In addition to modifying a cell size, EPGMM 208 may adjust a font size for one or more content cells, such as by increasing font size in an expanded content cell or decreasing font size in a contracted content cell, or vice-versa.

In various embodiments, EPGMM 208 may modify cell sizes for the dynamic scaling grid based on a selected content cell. The dynamic scaling grid may be navigated or traversed in response to user commands. For example, a user may use a remote control, keyboard, air mouse, touch screen, or other desired HID to control a pointer, cursor, or focus point on display 110. The user may cause, for example, a pointer to scroll through various content cells to select a content cell of interest. Although various embodiments may be described using a pointer or cursor by way of example, other techniques may be used to focus on the various elements of the screen. In some embodiments, for example, some of these control devices may not require the use of a pointer or cursor, but rather use other techniques to move the focus on the various elements of the screen, which is just a different user interface treatment of the element itself. As a result, some embodiments may not use a pointer or cursor. In some cases, the focus element and the pointer may be in two different locations on the screen. For example, a pointer is not over a selectable element of the user interface, and so the focus may be on the last element the pointer traversed. It may be appreciated that various techniques may be used to traverse the dynamic scaling grid to focus on a particular content cell of interest, and the embodiments are not limited in this context.

In one embodiment, for example, a user may cause the pointer to scroll through various content cells to select a content cell of interest. EPGMM 208 may then modify a cell size for the selected content cell. Selecting a content cell may be passively performed by merely rolling across or traversing a content cell with the pointer. In this case, EPGMM 208 may modify cell sizes based on a current position for the pointer. Alternatively, selecting a content cell may also be actively performed by stopping the pointer on a desired content cell and sending a user select command via a button, wheel or other input device. The embodiments are not limited in this context.

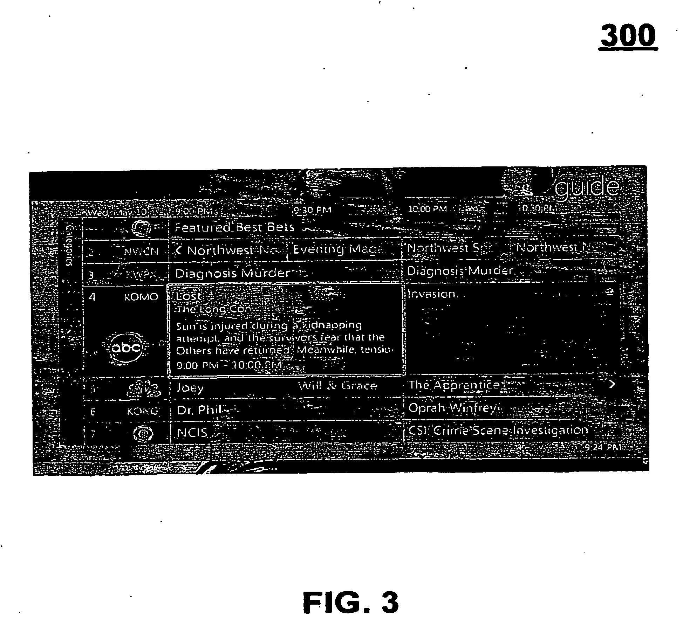

**FIG. 3** illustrates an image 300 of a dynamic scaling grid. As shown in FIG. 3, image 300 comprises multiple content cells arranged in a grid format. Along a horizontal or x-axis are time identifiers, such as 9:00 PM, 9:30 PM, 10:00 PM and 10:30 PM. In this embodiment, the time identifiers are not included in content cells but are external to the dynamic scaling grid, although alternative implementations may display the time identifiers (or other column identifiers) in content cells as well. Along a vertical or y-axis are a column of channel content cells, with each channel content cell having a channel identifier and station identifier or station logo (or other row identifiers), such as a channel identifier 2 and a station identifier NWCN, a channel identifier 3 and a station identifier KWPX, a channel identifier 4 and a station identifier KOMO, a channel identifier 5 and a station logo for NBC, a channel identifier 6 and a station identifier KONG, and a channel identifier 7 and a station logo for CBS. It may be appreciated that although time identifiers are displayed along the x-axis and channel content cells are displayed along the y-axis, some embodiments may reverse this mapping and display channel content cells along the x-axis and time identifiers along the y-axis, and still fall within the scope of the embodiments.

In various embodiments, some of the content cells within the dynamic scaling grid may host a program item and display a first set of metadata associated with the program item. As shown in image 300, the dynamic scaling grid may include multiple program content cells. Each program content cell may display a set of metadata associated with a program item hosted by the program content cell. When in an unselected or default mode, each program content cell typically displays a first set of metadata. As shown in image 300, the first set of metadata may comprise, for example, a program title, such as "Joey," "Dr. Phil," "The Apprentice," and so forth.

When a content cell is selected, however, EPGMM 208 may enlarge or expand the selected cell to accommodate a second set of metadata. Typically the second set of metadata comprises a larger set of metadata than the first set of metadata. Referring again to image 300, a selected program content cell may be identified by an enhanced or bolded border around the selected program content cell. When selected, EPGMM 208 may display more metadata about the program item hosted by the selected program content cell. In image 300, the selected program content cell hosts the program item *"Lost."* When selected, EPGMM 208 expands the program content cell for "Lost" to accommodate more metadata about the program "Lost," such as an episode title "The Long Con," an episode synopsis, and a time range "9:00 PM- 10:00 PM." In this manner, a user may obtain more detailed information about a program item of interest while remaining at a relatively same position within the dynamic scaling grid.

When a size for a selected content cell has been expanded, cell sizes for various content cells within the dynamic scaling grid may also be modified as well. For example, when a selected program content cell is expanded in a vertical direction, some or all of the content cells within the same row as the selected program content cell may be expanded as well. In another example, when a selected program content cell is expanded in a horizontal direction, some or all of the content cells within the same column as the selected program content cell may be expanded as well. In some cases, the content cells surrounding the expanded program content cell may include those cells adjacent to, or adjoining, the expanded program content cell. In yet another example, when a selected program content cell is expanded, various content cells surrounding the expanded program content cell may be contracted to accommodate the new size for the expanded program content cell. These contextual modifications allow the properties of the grid contents (e.g., such as start and end times of shows which are not in focus) to remain consistent or true while the secondary set of metadata is displayed.

In the event EPGMM 208 modifies a size for a surrounding content cell to the selected content cell, EPGMM 208 may display additional metadata for a surrounding content cell to take advantage of the increased display area. For example, expanding a height for the program item "Lost" may also expand the height a channel content cell for channel number 4 and station identifier KOMO. As a result, EPGMM 208 may display a station logo for KOMO (or promotional material, advertisements, video clips, and so forth) using the additional display area created when EPGMM 208 expanded the entire row containing the program content cell for "Lost." This provides further contextually relevant information (e.g., familiar branding, compelling content, and so forth) to the user and contextual advertising (e.g., program and portal promotion, brand recognition, and so forth) opportunities to content providers.

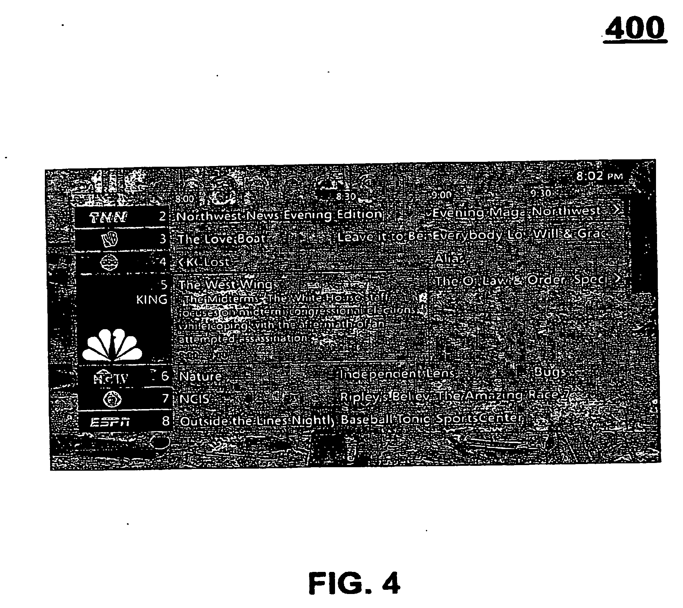

**FIG. 4** illustrates an image 400 of a dynamic scaling grid. Similar to image 300, image 400 has time identifiers along an x-axis and channel content cells along a y-axis. A program content cell hosting a program item "The West Wing" is selected as indicated by a different coloration of the background for the selected program content cell. The selected program content cell has been expanded in a horizontal direction and a vertical direction to accommodate the second set of metadata for "The West Wing." Note that the program content cell immediately adjacent to the selected *program* content cell is a program content cell hosting a program item "The Office."

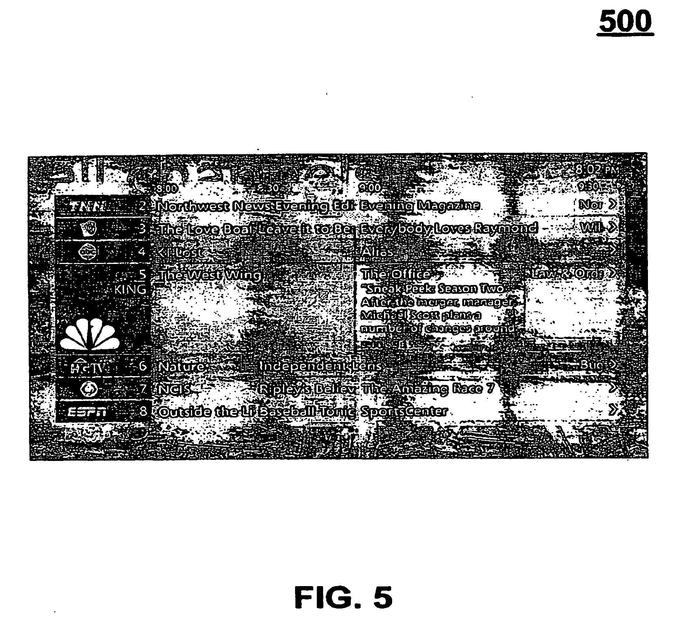

**FIG. 5** illustrates an image 500 ofa dynamic scaling grid. Image 500 is similar to image 400, except that the selected program content cell has been shifted right from "The West Wing" to the program content cell hosting a program item "The Office." Once selected, EPGMM 208 expands a cell size for the newly selected program content cell for "The Office" in both a vertical and horizontal direction. Similarly, EPGMM 208 increases the vertical height for the previously selected program content cell for "The West Wing" to match the vertical height increase for the adjacent program content cell for "The Office," but eliminates the second set of metadata previously displayed for "The West Wing." As a result, the cell size for the newly selected program content cell for "The Office" as shown in image 500 has been expanded relative to the unselected program content cell for "The Office" as shown in image 400. EPGMM 208 then displays a second set of metadata associate with the program item "The Office" in the expanded program content cell.

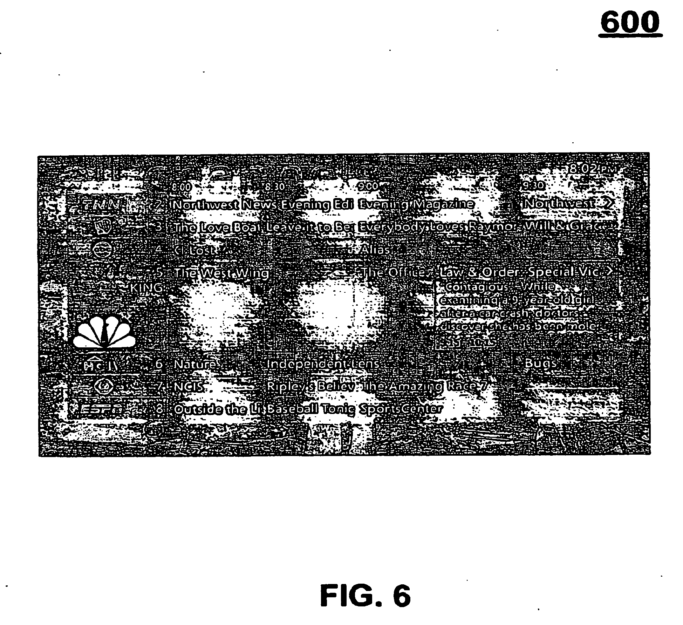

**FIG. 6** illustrates an image 600 of a dynamic scaling grid. Image 600 is similar to image 500, except that the selected program content cell has been shifted right again from "The Office" to the program content cell hosting a program item "Law & Order: Special Victims Unit" Once selected, EPGMM 208 expands a cell size for the newly selected program content cell for "Law & Order: Special Victims Unit" in both a vertical and horizontal direction. EPGMM 208 also contracts a cell size for the previously selected program content cell for "The Office" in a horizontal direction, and eliminates the second set of metadata displayed for "The Office" It is worthy to note that EPGMM 208 has not expanded the selected program content cell for "Law & Order: Special Victims Unit" sufficiently to fully display the second set of metadata associated with "Law & Order: Special Victims Unit." In this case, EPGMM 208 has been arranged to maintain the integrity and size of the external boundaries for the dynamic scaling grid, thereby leading to a limit on expansion size for the selected program content cell. In other embodiments, however, the external boundaries for the dynamic scaling grid may also be modified to accommodate the entire second set of metadata for an expanded content cell.

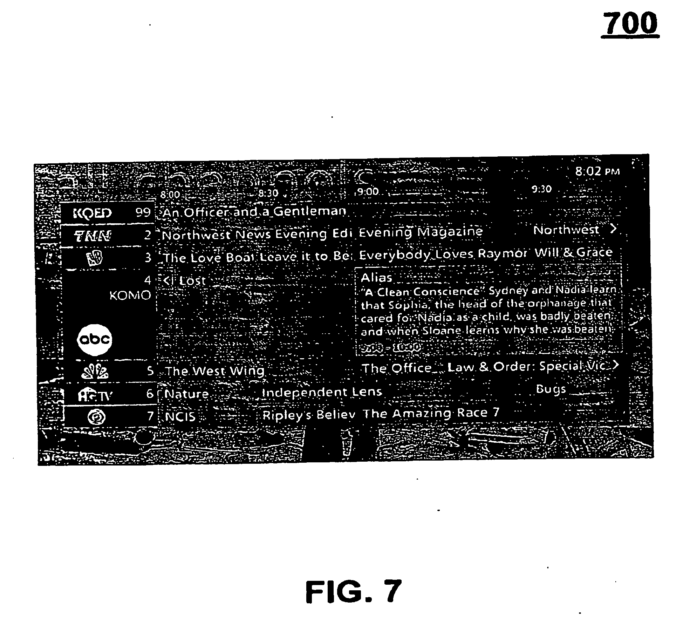

**FIG. 7** illustrates an image 700 for a dynamic scaling grid. Image 700 is similar to image 600, except that the focus has been shifted above "Law & Order: Special Victims Unit" to the program content cell hosting a program item "Alias." EPGMM 208 may expand the selected program content cell for "Alias" in a vertical direction, while contracting the entire row of content cells for the previously selected program content cell to a cell size sufficient to display the first set of metadata.

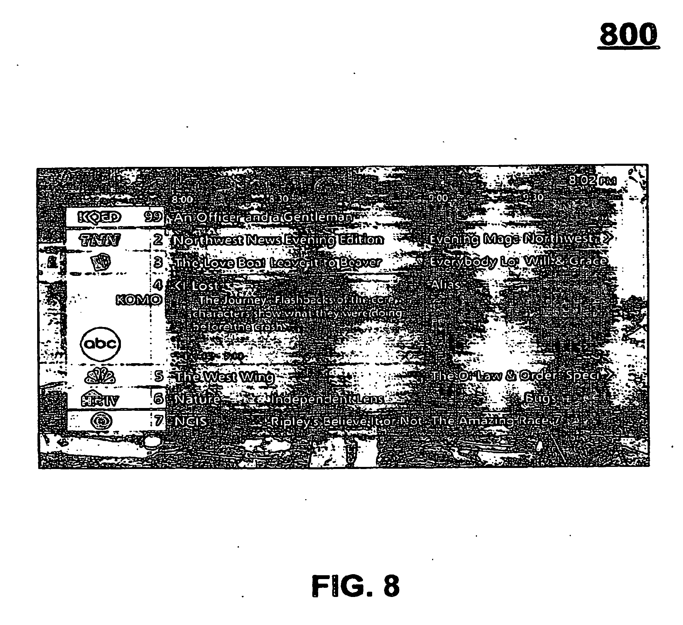

**FIG. 8** illustrates an image 800 for a dynamic scaling grid. Image 800 is similar to image 700, except that the focus has shifted left from "Alias" to the program content cell hosting a program item "Lost." EPGMM 208 may expand the selected program content cell for "Lost" in a vertical and horizontal direction to display a second set of metadata for "Lost," while eliminating the second set of metadata for "Alias."

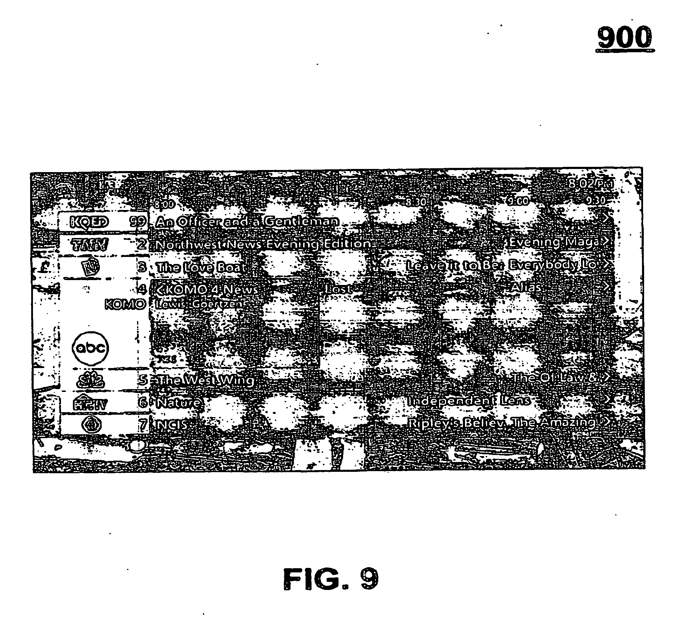

**FIG. 9** illustrates an image 900 for a dynamic scaling grid. Image 900 is similar to image 800, except that the focus has shifted left once again from "Lost" to the program content cell hosting a program item "News." As with previous examples, EPGMM 208 may expand the selected program content cell for "News" in a horizontal direction to display a second set of metadata for "News," while eliminating the second set of metadata for "Lost." In this case, the expansion is more dramatic given that the original cell size for the program content cell "News" was relatively narrow as compared to the other program content cells. Accordingly, EPGMM 208 performs a greater amount of expansion to display the second set of metadata associated with the program item "News."

It is worthy to note that when EPGMM 208 adjusts a content cell in the horizontal direction, EPGMM 208 may also adjust a position for the time identifiers displayed above the dynamic scaling grid. The positions for the time identifiers, however, do not necessarily need to correlate proportionally with the width of a given content cell. For example, the selected program content cell "News" has a second set of metadata with a time range of "7:35 - 8:05." EPGMM 208 has expanded the width of the selected program content cell to be greater than a proportional amount of time (e.g., 5 minutes) as indicated by the distance between time identifiers 8:00 and 8:30.

Operations for the above embodiments may be further described with reference to the following figures and accompanying examples. Some of the figures may include a logic flow. Although such figures presented herein may include a particular logic flow, it can be appreciated that the logic flow merely provides an example of how the general functionality as described herein can be implemented. Further, the given logic flow does not necessarily have to be executed in the order presented unless otherwise indicated. In addition, the given logic flow may be implemented by a hardware element, a software element executed by a processor, or any combination thereof. The embodiments are not limited in this context.

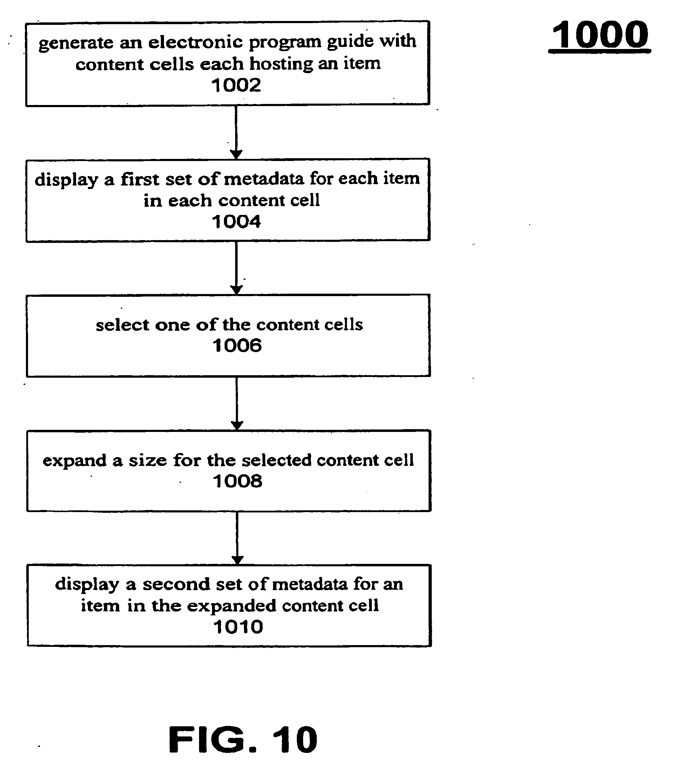

**FIG. 10** illustrates an exemplary embodiment of a logic flow. FIG. 10 illustrates a logic flow 1000 that may be implemented by media processing device 106 and/or EPGMM 208, for example. As shown in FIG. 10, an electronic program guide with content cells each hosting an item may be generated at block 1002. A first set of metadata may be displayed for each item in each content cell at block 1004. One of the content cells may be selected at block 1006. A size for the selected content cell may be expanded at block 1008. A second set of metadata for an item may be displayed in the expanded content cell at block 1010. The embodiments are not limited in this context.

In one embodiment, for example, a size for other content cells within a same row as the selected content cell may be expanded. A second set of metadata may be displayed for at least one item from the other content cells. The embodiments are not limited in this context.

In one embodiment, for example, a size for at least one of the content cells adjacent to the expanded content cell may be adjusted. For example, the cell size for adjacent content cells may be expanded or contracted as desired for a given implementation. Similarly, a font size for at least one of the modified content cells may be adjusted in addition to, or in conjunction with, a modification of a cell size. The embodiments are not limited in this context.

In one embodiment, for example, a size for an expanded content cell may be expanded by increasing a height along a vertical axis, a width along a horizontal axis, or in both directions. In some cases, the size for the expanded content cell may be expanded based on an amount of information for the second set of metadata to be displayed. The embodiments are not limited in this context.

In some cases, a size for all content cells within a same column or row as the expanded content cell may be expanded as well. If this occurs, a second set of metadata for one or more the unselected but expanded content cells may be displayed to take advantage of the additional display area.

Numerous specific details have been set forth herein to provide a thorough understanding of the embodiments. It will be understood by those skilled in the art, however, that the embodiments may be practiced without these specific details. In other instances, well-known operations, components and circuits have not been described in detail so as not to obscure the embodiments. It can be appreciated that the specific structural and functional details disclosed herein may be representative and do not necessarily limit the scope of the embodiments.

It is also worthy to note that any reference to "one embodiment" or "an embodiment" means that a particular feature, structure, or characteristic described in connection with the embodiment is included in at least one embodiment. The appearances of the phrase. "in one embodiment" in various places in the specification are not necessarily all referring to the same embodiment.

Some embodiments may be described using the expression "coupled" and "connected" along with their derivatives. It should be understood that these terms are not intended as synonyms for each other. For example, some embodiments may be described using the term "connected" to indicate that two or more elements are in direct physical or electrical contact with each other. In another example, some embodiments may be described using the term "coupled" to indicate that two or more elements are in direct physical or electrical contact. The term "coupled," however, may also mean that two or more elements are not in direct contact with each other, but yet still co-operate or interact with each other. The embodiments are not limited in this context.

Some embodiments may be implemented, for example, using a machine-readable medium or article which may store an instruction or a set of instructions that, if executed by a machine, may cause the machine to perform a method and/or operations in accordance with the embodiments. Such a machine may include, for example, any suitable processing platform, computing platform, computing device, computing device, computing system, processing system, computer, processor, or the like, and may be implemented using any suitable combination of hardware and/or software. The machine-readable medium or article may include, for example, any suitable type of memory unit, memory device, memory article, memory medium, storage device, storage article, storage medium and/or storage unit, for example, memory, removable or non-removable media, erasable or nonerasable media, writeable or re-writeable media, digital or analog media, hard disk, floppy disk, Compact Disk Read Only Memory (CD-ROM), Compact Disk Recordable (CD-R), Compact Disk Rewriteable (CD-RW), optical disk, magnetic media, magneto-optical media, removable memory cards or disks, various types of Digital Versatile Disk (DVD), a tape, a cassette, or the like.

Although the subject matter has been described in language specific to structural features and/or methodological acts, it is to be understood that the subject matter defined in the appended claims is not necessarily limited to the specific features or acts described above. Rather, the specific features and acts described above are disclosed as example forms of implementing the claims. **The following is a list of further preferred embodiments of the invention:**
Embodiment 1: An article comprising a machine-readable storage medium containing instructions that if executed enable a system to generate an electronic program guide with content cells each hosting an item, display a first set of metadata for each item in each content cell, select one of said content cells, expand a size for said selected content cell, and display a second set of metadata for an item in said expanded content cell.
Embodiment 2: The article of embodiment 1, further comprising instructions that if executed enable the system to expand a size for other content cells within a same row as said selected content cell, and display a second set of metadata for at least one item from said other content cells.
Embodiment 3: The article of embodiment 1, further comprising instructions that if executed enable the system to contract a size for at least one of said content cells adjacent to said expanded content cell.
Embodiment 4: The article of embodiment 1, further comprising instructions that if executed enable the system to adjust a font size for at least one of said content cells.
Embodiment 5: The article of embodiment 1, further comprising instructions that if executed enable the system to expand said size for said expanded content cell by increasing a height along a vertical axis, a width along a horizontal axis, or both.
Embodiment 6: The article of embodiment 1, further comprising instructions that if executed enable the system to expand a size for all content cells within a same column or row as said expanded content cell.
Embodiment 7: The article of embodiment 1, further comprising instructions that if executed enable the system to expand said size for said expanded content cell based on an amount of information for said second set of metadata.
Embodiment 8: The article of embodiment 1, said machine-readable storage medium comprising a processing device, a computer-readable medium, a communications medium, or a propagated signal.
Embodiment 9: A method, comprising:
   generating an electronic program guide with content cells each hosting an item;
   displaying a first set of metadata for each item in each content cell;
   selecting one of said content cells;
   expanding a size for said selected content cell; and
   displaying a second set of metadata for an item in said expanded content cell.
Embodiment 10: The method of embodiment 9, comprising contracting a size for at least one of said content cells adjacent to said expanded content cell.
Embodiment 11: The method of embodiment 9, comprising adjusting a font size for at least one of said content cells.
Embodiment 12: The method of embodiment 9, comprising expanding said size for said expanded content cell by increasing a height along a vertical axis, a width along a horizontal axis, or both.
Embodiment 13: The method of embodiment 9, comprising expanding a size for all content cells within a same column or row as said expanded content cell.
Embodiment 14: The method of embodiment 9, comprising expanding said size for said expanded content cell based on an amount of information for said second set of metadata.
Embodiment 15: The method of embodiment 9, wherein said first set of metadata comprises a program name, and said second set of metadata comprises an episode title, synopsis and time range.
Embodiment 16: The method of embodiment 9, wherein said second set of metadata comprises a greater amount of information than said first set of metadata.
Embodiment 17: An apparatus, comprising:
   a display (110) to display an electronic program guide comprising a dynamic scaling grid;
   a media processing device (106) coupled to said display, said media processing device comprising:
      a processor (202); and
      an electronic program guide management module (208) for execution by said processor, said electronic program guide management module to manage said dynamic scaling grid on said display, said dynamic scaling grid comprising content cells hosting program items to display a first set of associated metadata, with said content cells to expand when selected to display a second set of associated metadata for said program items.
Embodiment 18: The apparatus of embodiment 17, comprising a receiver to receive user instructions to select a given content cell.
Embodiment 19: The apparatus of embodiment 17, said electronic program guide management module to contract content cells adjacent to an expanded content cell.
Embodiment 20: The apparatus of embodiment 17, said electronic program guide management module to expand a height for a selected content cell and all content cells within a same row as said selected content cell.

## Claims

1. An article comprising a machine-readable storage medium containing instructions that if executed enable a system to perform a method, said method comprising the steps of:
generating (1002) an electronic program guide with content cells each hosting an item;
displaying (1004) a first set of metadata for each item in each content cell;
selecting (1006) one of said content cells;
expanding (1008) a cell size for said selected content cell based on an amount of information included in a second set of associated metadata;
contracting a size for at least one of said content cells adjacent to said expanded content cell;
decreasing a font size in the at least one contracted content cell; and
displaying (1010) the second set of metadata for an item in said expanded content cell.

2. The article of claim 1, further comprising instructions that if executed enable the system to further perform the steps of:
expanding a size for other content cells within a same row as said selected content cell, and displaying a second set of metadata for at least one item from said other content cells; or
expanding said cell size for said expanded content cell by increasing a height along a vertical axis, a width along a horizontal axis, or both.

3. The article of claim 1 or 2, said machine-readable storage medium comprising a processing device, a computer-readable medium, a communications medium, or a propagated signal.

4. A method, comprising:
generating (1002) an electronic program guide with content cells each hosting an item;
displaying (1004) a first set of metadata for each item in each content cell;
selecting (1006) one of said content cells;
expanding (1008) a cell size for said selected content cell based on an amount of information included in a second set of associated metadata;
contracting a size for at least one of said content cells adjacent to said expanded content cell;
decreasing a font size in the at least one contracted content cell; and
displaying (1010) the second set of metadata for an item in said expanded content cell.

5. The method of claim 4, comprising expanding said cell size for said expanded content cell by increasing a height along a vertical axis, a width along a horizontal axis, or both.

6. The method of claim 4, wherein said first set of metadata comprises a program name, and said second set of metadata comprises an episode title, synopsis and time range.

7. The method of claim 4, wherein said second set of metadata comprises a larger set of metadata than said first set of metadata.

8. An apparatus, comprising:
a display (110) adapted for displaying an electronic program guide comprising a dynamic scaling grid;
a media processing device (106) coupled to said display, said media processing device comprising:
a processor (202);
an electronic program guide management module (208) for execution by said processor, said electronic program guide management module being adapted for managing said dynamic scaling grid on said display, said dynamic scaling grid comprising content cells hosting program items to display a first set of associated metadata; and
a receiver to receive user instructions to select a given content cell,
wherein said electronic program guide management module is further adapted for
expanding a cell size for said selected content cell based on an amount of information included in a second set of associated metadata;
contracting a size for at least one of said content cells adjacent to said expanded content cell;
decreasing a font size in the at least one contracted content cell; and displaying (1010) the second set of metadata for an item in said expanded content cell.

9. The apparatus of claim 8. said electronic program guide management module being further adapted for expanding a height for the selected content cell and all content cells within a same row as said selected content cell.

## Patentansprüche

1. Artikel, der ein maschinenlesbares Speichermedium umfasst, das Instruktionen enthält, die, falls sie ausgeführt werden, einem System ermöglichen, ein Verfahren durchzuführen, wobei das Verfahren die Schritte umfasst:
Erzeugen (1002) eines elektronischen Programmführers mit Inhaltszellen, von denen jede ein Element aufnimmt;
Anzeigen (1004) eines ersten Satzes von Metadaten für jedes Element in jeder Inhaltszelle;
Auswählen (1006) einer der Inhaltszellen;
Expandieren (1008) einer Zellengröße für die ausgewählte Inhaltszelle auf der Grundlage eines Satzes von Informationen, die in einem zweiten Satz von zugehörigen Metadaten umfasst sind;
Zusammenziehen einer Größe für wenigstens eine der Inhaltszellen, die zur expandierten Inhaltszelle benachbart sind;
Verkleinern einer Schriftgröße in der wenigstens einen zusammengezogenen Zelle; und
Anzeigen (1010) des zweiten Satzes von Metadaten für ein Element in der expandierten Inhaltszelle.

2. Artikel gemäß Anspruch 1, der ferner Instruktionen umfasst, die, falls sie ausgeführt werden, dem System ermöglichen, ferner die Schritte auszuführen:
Expandieren einer Größe für andere Inhaltszellen in derselben Zeile wie die ausgewählte Inhaltszelle und Anzeigen eines zweiten Satzes von Metadaten für wenigstens ein Element aus den anderen Inhaltszellen; oder
Expandieren der Zellengröße für die expandierte Inhaltszelle durch Vergrößern einer Höhe entlang einer vertikalen Achse, einer Breite entlang einer horizontalen Achse, oder beides.

3. Artikel gemäß Anspruch 1 oder 2, wobei das maschinenlesbare Speichermedium eine Verarbeitungsvorrichtung, ein computerlesbares Medium, ein Kommunikationsmedium oder ein sich fortpflanzendes Signal umfasst.

4. Verfahren, welches umfasst:
Erzeugen (1002) eines elektronischen Programmführers mit Inhaltszellen, von denen jede ein Element aufnimmt;
Anzeigen (1004) eines ersten Satzes von Metadaten für jedes Element in jeder Inhaltszelle;
Auswählen (1006) einer der Inhaltszellen;
Expandieren (1008) einer Zellengröße für die ausgewählte Inhaltsgröße auf der Grundlage eines Satzes von Informationen, die in einem zweiten Satz von zugehörigen Metadaten umfasst sind;
Zusammenziehen einer Größe für wenigstens eine der Inhaltszellen, die zur expandierten Inhaltszelle benachbart sind;
Verkleinern einer Schriftgröße in der wenigstens einen zusammengezogenen Inhaltszelle; und
Anzeigen (1010) des zweiten Satzes von Metadaten für ein Element in der expandierten Inhaltszelle.

5. Verfahren gemäß Anspruch 4, welches ein Expandieren der Zellengröße für die expandierte Zellengröße durch Vergrößern einer Höhe entlang einer vertikalen Achse, einer Breite entlang einer horizontalen Achse oder beides umfasst.

6. Verfahren gemäß Anspruch 4, wobei der erste Satz von Metadaten einen Programmnamen umfasst und der zweite Satz von Metadaten einen Episodentitel, Synopse und Zeitbereich umfasst.

7. Verfahren gemäß Anspruch 4, wobei der zweite Satz von Metadaten einen größeren Satz von Metadaten als den ersten Satz von Metadaten umfasst.

8. Vorrichtung, die umfasst:
eine Anzeige (110), die ausgelegt ist zum Anzeigen eines elektronischen Programmführers, der ein dynamisches Skalierungsgitter umfasst;
eine Medienverarbeitungsvorrichtung (106), die an die Anzeige gekoppelt ist, wobei die Medienverarbeitungsvorrichtung umfasst:
einen Prozessor (202);
ein Managementmodul (208) für den elektronischen Programmführer zur Ausführung durch den Prozessor, wobei das Managementmodul für den elektronischen Programmführer ausgelegt ist zum Verwalten des dynamischen Skalierungsgitters auf der Anzeige, wobei das dynamische Skalierungsgitter Inhaltszellen umfasst, die Programmelemente aufnehmen, um einen ersten Satz von zugehörigen Metadaten anzuzeigen; und
einen Empfänger, um Benutzerinstruktionen zu empfangen, um eine gegebene Inhaltszelle auszuwählen,
wobei das Managementmodul für den elektronischen Programmführer ferner ausgelegt ist zum:
Expandieren einer Zellengröße für die ausgewählte Inhaltszelle auf der Grundlage eines Satzes von Informationen, die in einem zweiten Satz von zugehörigen Metadaten umfasst sind;
Zusammenziehen einer Größe für wenigstens eine der Inhaltszellen, die zur expandierten Inhaltszelle benachbart sind;
Verkleinern einer Schriftgröße in der wenigstens einen zusammengezogenen Inhaltszelle; und
Anzeigen (1010) des zweiten Satzes von Metadaten für ein Element in der expandierten Inhaltszelle.

9. Vorrichtung gemäß Anspruch 8, wobei das Managementmodul für den elektronischen Programmführer ferner ausgelegt ist, eine Höhe für die ausgewählte Inhaltszelle und alle Inhaltszellen in derselben Zeile wie die ausgewählte Inhaltszelle zu expandieren.

## Revendications

1. Produit comprenant un support de stockage lisible en machine contenant des instructions qui, si elles sont exécutées, permettent à un système d'effectuer un procédé, ledit procédé comprenant les étapes consistant à :
générer (1002) un guide de programme électronique avec des cellules de contenu hébergeant chacune un article ;
afficher (1004) un premier jeu de métadonnées pour chaque article de chaque cellule de contenu ;
sélectionner (1006) l'une desdites cellules de contenu ;
étendre (1008) une taille cellulaire pour ladite cellule de contenu sélectionnée sur la base d'une quantité d'informations comprise dans un second jeu de métadonnées associées ;
contracter une taille pour au moins l'une desdites cellules de contenu adjacentes à ladite cellule de contenu étendue ;
réduire une taille de police dans la au moins une cellule de contenu contractée ; et
afficher (1010) le second jeu de métadonnées pour un article de ladite cellule de contenu étendue.

2. Produit selon la revendication 1, comprenant par ailleurs des instructions qui, si elles sont exécutées, permettent au système d'effectuer encore les étapes consistant à :
étendre une taille pour d'autres cellules de contenu au sein d'une même rangée que ladite cellule de contenu sélectionnée, et
afficher un second jeu de métadonnées pour au moins un article provenant desdites autres cellules de contenu ; ou
étendre ladite taille cellulaire pour ladite cellule de contenu étendue en augmentant une hauteur le long d'un axe vertical, une largeur le long d'un axe horizontal ou les deux.

3. Produit selon la revendication 1 ou 2, dans lequel ledit support de stockage lisible en machine comprend un dispositif de traitement, un support lisible sur ordinateur, un support de communication ou un signal propagé.

4. Procédé comprenant les étapes consistant à :
générer (1002) un guide de programme électronique avec des cellules de contenu hébergeant chacune un article ;
afficher (1004) un premier jeu de métadonnées pour chaque article de chaque cellule de contenu ;
sélectionner (1006) l'une desdites cellules de contenu ;
étendre (1008) une taille cellulaire pour ladite cellule de contenu sélectionnée sur la base d'une quantité d'informations comprise dans un second jeu de métadonnées associées ;
contracter une taille pour au moins l'une desdites cellules de contenu adjacentes à ladite cellule de contenu étendue ;
réduire une taille de police dans la au moins une cellule de contenu contractée ; et
afficher (1010) le second jeu de métadonnées pour un article de ladite cellule de contenu étendue.

5. Procédé selon la revendication 4, comprenant l'extension de ladite taille cellulaire pour ladite cellule de contenu étendue en augmentant une hauteur le long d'un axe vertical, une largeur le long d'un axe horizontal ou les deux.

6. Procédé selon la revendication 4, dans lequel ledit premier jeu de métadonnées comprend un nom de programme et ledit second jeu de métadonnées comprend un titre d'épisode, un synopsis et un intervalle de temps.

7. Procédé selon la revendication 4, dans lequel ledit second jeu de métadonnées comprend un jeu plus grand de métadonnées que ledit premier jeu de métadonnées.

8. Appareil comprenant :
un affichage (110) qui est à même d'afficher un guide de programme électronique comprenant une grille dz cadrage dynamique ;
un dispositif de traitement de supports (106) couplé audit affichage, ledit dispositif de traitement de supports comprenant :
un processeur (202) ;
un module de gestion de guide de programme électronique (208) pour exécution par ledit processeur, ledit module de gestion de guide de programme électronique étant à même de gérer ladite grille de cadrage dynamique sur ledit affichage, ladite grille de cadrage dynamique comprenant des cellules de contenu hébergeant des articles de programme pour afficher un premier jeu de métadonnées associées ; et
un récepteur pour recevoir des instructions utilisateur afin de choisir une cellule de contenu donnée,
dans lequel ledit module de gestion de guide de programme électronique est encore adapté pour effectuer les opérations suivantes :
extension d'une taille cellulaire pour ladite cellule de contenu sélectionnée sur la base d'une quantité d'informations comprise dans un second jeu de métadonnées associées ;
contraction d'une taille pour au moins l'une desdites cellules de contenu adjacentes à ladite cellule de contenu étendue ;
réduction d'une taille de police dans la au moins une cellule de contenu contractée ; et
affichage (1010) du second jeu de métadonnées pour un article dans ladite cellule de contenu étendue.

9. Appareil selon la revendication 8, dans lequel ledit module de gestion de guide de programme électronique est encore adapté pour étendre une hauteur pour la cellule de contenu sélectionnée et pour toutes les cellules de contenu au sein d' une même rangée que ladite cellule de contenu sélectionnée.
